# EUROPEAN PATENT APPLICATION

(11) **EP 1 169 916 A2**
(43) Date of publication of application: **09.01.2002**
(21) Application number: 01304960.6
(22) Date of filing: 06.06.2001
(51) Int. Cl.: A01K 5/01

(54) **"Animal feed container"**

(30) Priority: 30.06.2000 GB 0015911
(71) Applicant: Carrs Agriculture Limited, Carlisle, Cumbria CA1 2UY (GB)
(72) Inventor: Freeman, Richard Colin, Gretna, Dumfriesshire DG16 5BZ (GB); Jarman, ALison, North Helmsley, North Yorkshire YO62 5LG (GB); Atherton, Edward, Carlisle, Cumbria CA7 8NH (GB)
(74) Representative: Murnane, Graham John

(57) **Abstract**

A livestock feed container assembly (1) including a container (3) and a bracket (2). The container (3) is adapted to hold animal feed and comprises at least one side wall having a generally U-shaped flange (12) extending from the top of the side wall. The bracket (2) comprises wall mounting means, a support member (8, 9) adapted to engage with the internal surface of the U-shaped flange (12), a clamping member (4) adapted to engage with the external surface of the U-shaped flange (12), and fixing means (5) adapted to secure the clamping member (4) to the support member (8, 9).

## Description

The present invention relates to a livestock feed container assembly and to a bracket and feed container for use as part of a livestock feed container assembly.

Livestock, such as cattle and horses, often require dietary supplements to maintain good health. For instance, protein can often be deficient in a herbivorous animal and this can be delivered to the animal in a molasses block for the animal to lick. Other feed supplements are also used.

The manufacturers of such feed supplements generally supply them in containers, typically plastic, that are usually either left on the floor for the animal or nailed to some convenient part of the wall.

Both of these methods have inherent problems. Left on the floor, the tubs are easily spilt by the animal. Nailing to a wall can be time-consuming, unsafe and impractical depending on the design of the animal's dwelling. When the container is empty it must be replaced, and the replacement container must then be nailed to the wall, making replacement of the feed supplement time-consuming.

It is an object of the present invention to provide a livestock feed container assembly which overcomes one or more of the above problems.

According to the first aspect of the present invention there is provided a livestock feed container assembly comprising a container and a bracket,
said container being adapted to hold animal feed and comprising at least one side wall having a generally U-shaped flange extending from the top of the side wall,
said bracket comprising:
wall mounting means,
a support member adapted to engage with the internal surface of the U-shaped flange,
a clamping member adapted to engage with the external surface of the U-shaped flange, and
fixing means adapted to secure the clamping member to the support member.

Preferably the container is a box, most preferably a plastic box.

The assembly may further comprise animal feed in the container. Preferably the animal feed is in the form of a solid or highly viscous block, for example a molasses block. Preferably the animal feed contains added nutrients in concentrate form, for example protein supplements.

Preferably the U-shaped flange of the container comprises a substantially horizontal flange connected at its first edge to the top of the side wall and at its second edge to a substantially vertical flange.

Preferably the bracket comprises a generally vertical, planar plate member adapted to be placed against a wall. Preferably the wall mounting means are holes adapted to receive mounting fixings in the form of nails, screws or bolts. Preferably the wall mounting means comprises a plurality of holes provided in the plate member.

Preferably the support member comprises a generally horizontal shelf member spaced away from the plane of the plate member. Preferably the shelf member is adapted to engage with the internal surface of the horizontal flange of the container. Preferably the support member further comprises a generally vertical web member spaced away from the plane of the plate member. Preferably the web member is adapted to engage with the internal surface of the vertical flange of the container. The support member may comprise an inclined support member which connects the plate member and the web member.

Preferably the clamping member comprises a generally planar bar. Preferably the fixing means comprises one or more projecting members provided on one of the clamping member and shelf member adapted to engage with corresponding apertures in the other of the clamping member and shelf member. Preferably the fixing means comprises Antiluce™ fasteners or similar.

According to a second aspect of the present invention there is provided a bracket for a livestock feed container assembly adapted to hold animal feed, said bracket comprising:
wall mounting means,
a support member adapted to engage with the internal surface of a U-shaped flange of a container,
a clamping member adapted to engage with the external surface of the U-shaped flange, and
fixing means adapted to secure the clamping member to the support member.

Preferably the bracket comprises a generally vertical, planar plate member adapted to be placed against a wall. Preferably the wall mounting means are holes adapted to receive mounting fixings in the form of nails, screws or bolts. Preferably the wall mounting means comprises a plurality of holes provided in the plate member.

Preferably the support member comprises a generally horizontal shelf member spaced away from the plane of the plate member. Preferably the shelf member is adapted to engage with the internal surface of the horizontal flange of the container. Preferably the support member further comprises a generally vertical web member spaced away from the plane of the plate member. Preferably the web member is adapted to engage with the internal surface of the vertical flange of the container. The support member may comprise an inclined support member which connects the plate member and the web member.

Preferably the clamping member comprises a generally planar bar. Preferably the fixing means comprises one or more projecting members provided on one of the clamping member and shelf member adapted to engage with corresponding apertures in the other of the clamping member and shelf member. Preferably the fixing means comprises Antiluce™ fasteners or similar.

The features of the present invention will be more readily understood from the following description of preferred embodiments, by way of example thereof, with reference to the accompanying drawings of which:-
Figure 1 is an isometric view of a livestock feed container according to the present invention.
Figure 2 is an isometric view of another embodiment of a livestock feed container according to the present invention.
Figure 3 shows a front elevation of the bracket of the assembly of figures 1 and 2.
Figure 4 is a side elevation of the bracket of figure 3.
Figure 5 is a side elevation of the livestock feed container of the assembly of figures 1 and 2.
Figure 6 is a plan elevation of the clamping bar of the assembly of figure 1.
Figure 7 is a side elevation of the clamping bar of figure 5.
Figures 8 and 9 show front and side elevations respectively of an Antiluce™ fastener used in the assembly of figures 1 and 2.

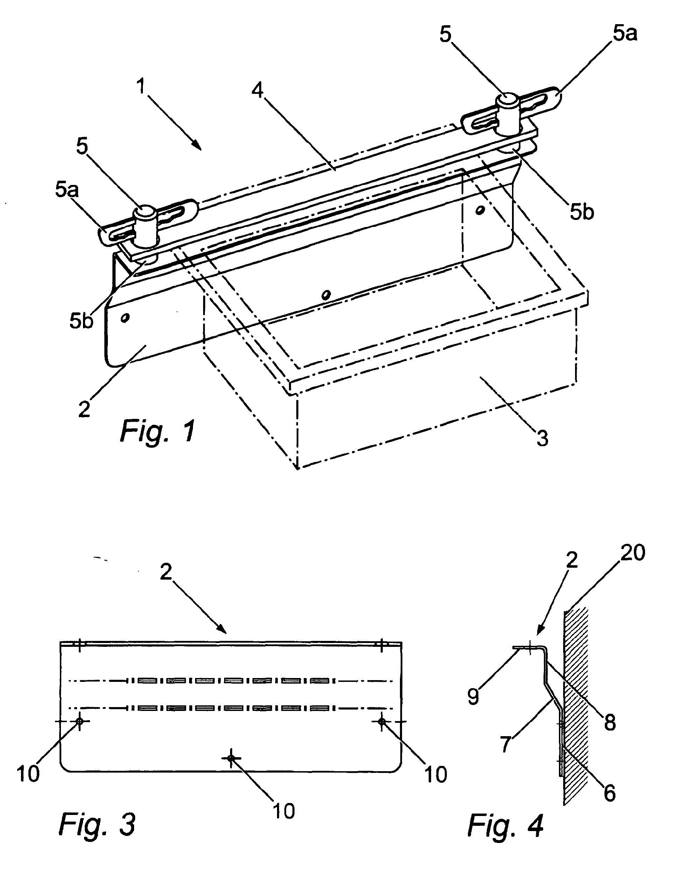

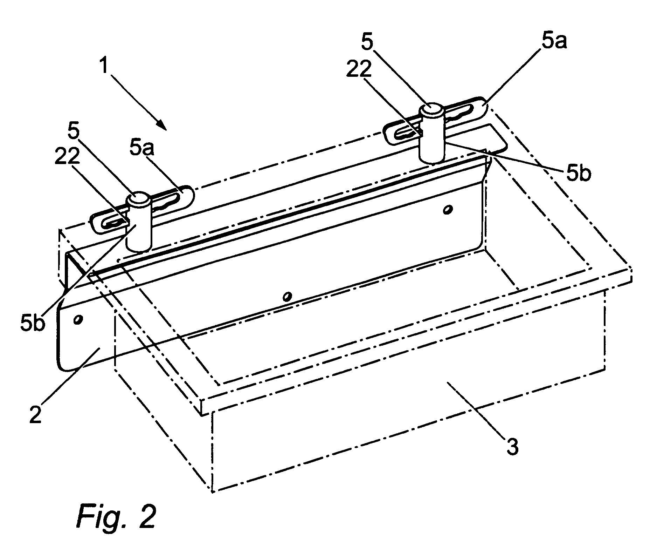

Referring to the drawings, Figure 1 shows an isometric view of the livestock feed container assembly 1 comprising a wall-mounted bracket 2, a livestock feed container 3, a clamping bar 4 and two Antiluce™ fasteners 5. The container 3 is purchased separately and contains a molasses-based protein supplement, such as that sold under the Trade Mark HORSLYX™. When the supplement is finished the empty container 3 is removed from the bracket 2 by rotating the Antiluce™ clips 5a through 90° so that the clamping bar 4 can be lifted off the engaging pins 5b and the empty container 3 then lifted off the bracket 2. The new container 3 which is filled with the supplement is then hooked over the bracket 2. The container 3 has a U-shaped flange 12 which engages with the bracket to allow the container 3 to hang from the bracket 2. The clamping bar 4 is then replaced on the engaging pins 5b and the clips 5a are rotated back through 90° to adopt the position shown in Figure 1 in which the flange 12 is engaged between the clamping bar 4 and the bracket 2, thereby securely holding the container 3 on the bracket and preventing the container 3 from being dislodged by animals feeding from the container 3.

Figure 2 shows an alternative embodiment of the present invention. The bracket 2 has been shortened so that it is substantially the same length as the container 3. Consequently, the distance between the two Antiluce™ fasteners 5 is reduced and is less than the length of the container 3. Holes 22 are provided on the container 3 for mounting the container 3 on the engaging pins 5b of the fastener 5. The clips 5a of the fastener 5 may then be used to directly clamp the container 3. Thus the clamping bar 4 may be omitted. In this embodiment it can be appreciated that the fixing means comprises the engaging pins 5b of the fastener 5 and the clamping means comprises the clips 5a of the fastener 5.

Referring to Figures 3 and 4, the bracket 2 contains a number of fixing holes 10 that allow the bracket to be attached to a vertical surface, such as a wall 20, using nails, screws or bolts (not shown). It is to be understood that other methods of fixing the bracket to a wall of a stable, horse box etc may be used, for example adhesives, welding, wall ties etc. The bracket has a vertical, planar plate member 6 which in use is secured flush against a wall, and a support member 8, 9, which in use engages with the underside of the U-shaped flange. The support member comprises a vertical web member 8, which in use extends parallel to and spaced away from the wall 20 and a horizontal shelf member 9, which in use projects away from the wall 20. An inclined support member 7 connects the planar plate member 6 to the vertical web 8 of the support member.

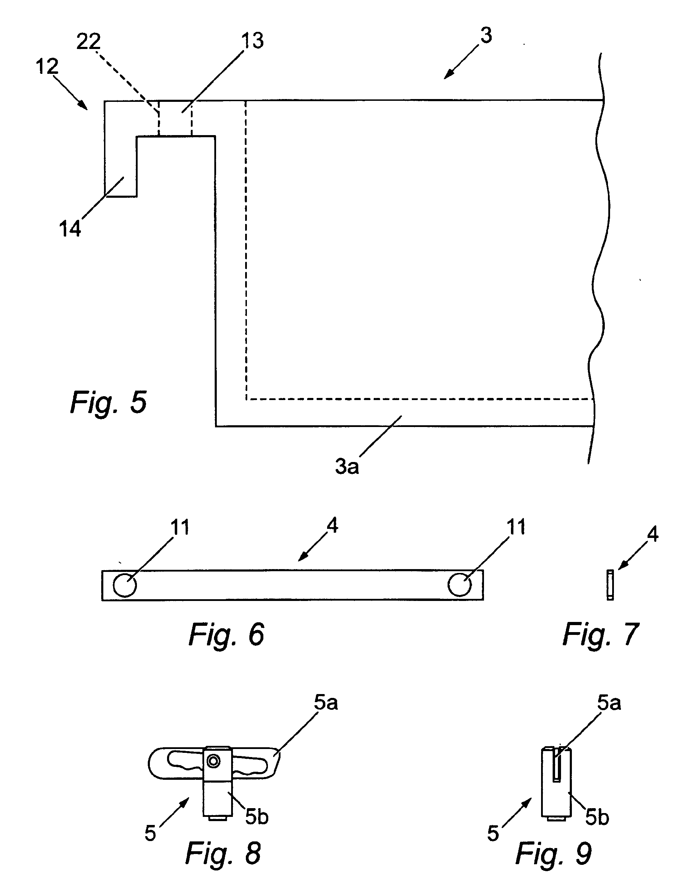

Figure 5 shows in detail the feed container 3 and its U-shaped flange 12. The U-shaped flange 12 is composed of a generally horizontal web member 13 and a generally vertical flange member 14. Optionally, holes 22 may be provided in the web member 13 for fixing the container 3 to the bracket 2. The U-shaped flange 12 is adapted so as to engage with the support member 8, 9 of the bracket 2. When the container 3 is attached to the bracket 2, the horizontal web member 13 rests on the shelf member 9 and the vertical flange member 14 is held between the vertical web member 8 and the wall 20. Typically the thickness of the vertical flange member 14 is equal to the offset of the vertical web 8 and the plate 6 of the bracket 2.

The clamping bar 4 shown in Figures 6 and 7 sits on top of the horizontal web section 13 of the U-shaped flange 12 and is held firmly in place by Antiluce™ fasteners 5 shown in Figures 8 and 9 preventing movement of the container 3. The Antiluce™ fasteners have engaging pins 5b which are attached by welding or similar to the shelf member 9 of the bracket 2. The clamping bar 4 is provided with two apertures 11 at the same spacing as the pins 5b, so that they engage with the pins 5b when the bar is placed over the U-shaped flange 12. It is to be understood that other types of fastener may be used, for example the pins 5b may be externally threaded, and wing nuts or knurled nuts (not shown) may be used to secure the clamping bar. Other threaded fasteners may be used.

The material of the bracket is steel, which may be galvanised, coated, painted or stainless steel. Alloys or suitably reinforced plastics may be used instead.

The apparatus of the invention enables a container to be replaced easily when empty, the containers being cheap enough to serve as packaging for the feed and to be replaced every time new feed is purchased.

Modifications and improvements may be made to the embodiments without departing from the scope of the invention. For instance, other shapes of engaging flange other than right-angled flange 12 of the container shown in the attached drawings may be used, with corresponding changes where necessary to the shape of the support member 8, 9 of the bracket 2. The bracket 2 may be provided with a horizontal flange (not shown) at the lower edge of the plate 6 to support the underside 3a of the container 3. Part or all of the horizontal shelf member 9 may be omitted. The inclined member 7 of the bracket may be replaced by a horizontal web member, or it may be omitted altogether and the thickness of the plate member 6 increased to ensure that the vertical web member 8 is spaced from the wall 20.

## Claims

1. A livestock feed container assembly (1) comprising a container (3) and a bracket (2), said container (3) being adapted to hold animal feed and comprising at least one side wall having a generally U-shaped flange (12) extending from the top of the side wall,
wherein said bracket (2) comprises:
wall mounting means,
a support member (8,9) adapted to engage with the internal surface of the U-shaped flange (12),
a clamping member adapted to engage with the external surface of the U-shaped flange (12), and
fixing means adapted to secure the clamping member to the support member (8,9).

2. A livestock feed container assembly (1) as claimed in Claim 1, wherein the container (3) further comprises animal feed.

3. A livestock feed container assembly (1) as claimed in any preceding claim, wherein the U-shaped flange of the container comprises a substantially horizontal flange (13) connected at its first edge to the top of the side wall and at its second edge to a substantially vertical flange (14).

4. A livestock feed container assembly (1) as claimed in any preceding claim, wherein the bracket (2) comprises a generally vertical, planar plate member (6) adapted to be placed against a wall.

5. A livestock feed container assembly (1) as claimed in any preceding claim, wherein the wall mounting means comprises a plurality of holes (10) provided in the plate member (6), and wherein the holes (10) are adapted to receive mounting fixings in the form of nails, screws or bolts.

6. A livestock feed container assembly (1) as claimed in any preceding claim, wherein the support member comprises a generally horizontal shelf member (9) spaced away from the plane of the plate member (6), and wherein the shelf member (9) is adapted to engage with the internal surface of the horizontal flange (13) of the container (3).

7. A livestock feed container assembly (1) as claimed in any of Claims 4 to 6, wherein the support member further comprises a generally vertical web member (8) spaced away from the plane of the plate member (6), and wherein the web member (8) is adapted to engage with the internal surface of the vertical flange (14) of the container (3).

8. A livestock feed container assembly (1) as claimed in any preceding claim, wherein the clamping member comprises a generally planar bar (4).

9. A livestock feed container assembly (1) as claimed in any of Claims 6 to 8, wherein the fixing means comprises one or more projecting members (5) provided on one of the clamping member (4) and shelf member (9) adapted to engage with corresponding apertures (11) in the other of the clamping member (4) and shelf member (9).

10. A livestock feed container assembly (1) as claimed in Claim 9, wherein the fixing means further comprises one or more Antiluce™ fasteners (5).

11. A livestock feed container assembly (1) as claimed in any of Claims 1 to 7, including a plurality of clamping members (4) and fixing means (5), each fixing means (5) comprising a pin (5b) adapted to pass through an aperture (22) provided in the flange (12)of the container (3).

12. A livestock feed container assembly (1) as claimed in Claim 11, wherein each clamping member comprises the pivotable clip (5a) of an Antiluce™ fastener, and each fixing means comprises the corresponding pin (5b) of an Antiluce™ fastener.

13. A bracket (2) for a livestock feed container assembly (1) adapted to hold animal feed,
wherein said bracket (2) comprises:
wall mounting means,
a support member (8,9) adapted to engage with the internal surface of a U-shaped flange (12) of a container (3), a clamping member adapted to engage with the external surface of the U-shaped flange (12), and fixing means adapted to secure the clamping member to the support member (8,9).

14. A bracket (2) for a livestock feed container assembly (1) as claimed in Claim 13, wherein the bracket (2) comprises a generally vertical, planar plate member (6) adapted to be placed against a wall.

15. A bracket (2) for a livestock feed container assembly (1) as claimed in Claim 13 or Claim 14, wherein the wall mounting means comprises a plurality of holes (10) provided in the plate member (6), and wherein the holes (10) are adapted to receive mounting fixings in the form of nails, screws or bolts.

16. A bracket (2) for a livestock feed container assembly (1) as claimed in any of Claims 14 to 16, wherein the support member comprises a generally horizontal shelf member (9) spaced away from the plane of the plate member (6), and wherein the shelf member (9) is adapted to engage with the internal surface of the horizontal flange (13) of the container (3).

17. A bracket (2) for a livestock feed container assembly (1) as claimed in any of Claims 14 to 16, wherein the support member further comprises a generally vertical web member (8) spaced away from the plane of the plate member (6), and wherein the web member (8) is adapted to engage with the internal surface of the vertical flange (14) of the container (3).

18. A bracket (2) for a livestock feed container assembly (1) as claimed in any of Claims 13 to 17, wherein the clamping member comprises a generally planar bar (4).

19. A bracket (2) for a livestock feed container assembly (1) as claimed in any of Claims 16 to 18, wherein the fixing means comprises one or more projecting members (5) provided on one of the clamping member (4) and shelf member (9) adapted to engage with corresponding apertures (11) in the other of the clamping member (4) and shelf member (9) .

20. A bracket (2) for a livestock feed container assembly (1) as claimed in Claim 19, wherein the fixing means further comprises one or more Antiluce™ fasteners (5).

21. A bracket (2) for a livestock feed container assembly (1) as claimed in any of Claims 13 to 17, including a plurality of clamping members (4) and fixing means (5), each fixing means (5) comprising a pin (5b) adapted to pass through an aperture (22) provided in the flange (12) of the container (3).

22. A bracket (2) for a livestock feed container assembly (1) as claimed in Claim 21, wherein each clamping member comprises the pivotable clip (5a) of an Antiluce™ fastener, and each fixing means comprises the corresponding pin (5b) of an Antiluce™ fastener.
